# EUROPEAN PATENT APPLICATION

(11) **EP 3 677 955 A1**
(43) Date of publication of application: **08.07.2020**
(21) Application number: 19218947.0
(22) Date of filing: 20.12.2019
(51) Int. Cl.: G02F 1/13357

(54) **BACKLIGHT UNIT AND HEAD-UP DISPLAY**

(30) Priority: 07.01.2019 JP 2019000723
(71) Applicant: YAZAKI CORPORATION, Minato-ku, Tokyo 108-8333 (JP)
(72) Inventor: NARUSHIMA, Noriaki, Shizuoka, 410-1194 (JP)
(74) Representative: Grünecker Patent- und Rechtsanwälte PartG mbB

(57) **Abstract**

A backlight unit (20) includes: a first light source (22a), a first front lens (25) configured to condense light emitted from the first light source (22a), a first rear lens (23) configured to condense light emitted from the first front lens (25), a second light source (22b) adjacent to the first light source (22a), a second front lens (26) configured to condense light emitted from the second light source (22b), a second rear lens (24) connected with the first rear lens (23) at an edges (El, E2) and configured to condense light emitted from the second front lens (26), and a diffusion member (27) facing a light-emitting surface (23b) of the first rear lens (23) and a light-emitting surface (24b) of the second rear lens (24). An outer edge portion of the light condensed by the first front lens (25) enters the edge (E2) of the second rear lens (24), and an outer edge portion of the light condensed by the second front lens (26) enters the edge (El) of the first rear lens (23) .

## Description

### BACKGROUND OF THE INVENTION

### 1. Field of the Invention

The present invention relates to a backlight unit and a head-up display.

### 2. Description of the Related Art

Such a backlight unit is well known that condenses light from a light source with a condenser lens and emits the light toward a device such as a liquid crystal display. This type of backlight unit is used for a head-up display and other devices.

For example, Japanese Patent Application Laid-open No. 2009-122654 describes a technique relating to a display that includes a light source unit having a plurality of light sources disposed on a substrate, a lens member including a plurality of lenses, corresponding to respective light sources, to condense light rays from the light sources, a display device to be backlighted by the light rays emitted through the lenses. The lens member has connection portions that connect between the boundary portions of the lenses. According to Japanese Patent Application Laid-open No. 2009-122654, the display is allowed to reduce variation in the luminance of light passing through the display device.

A backlight unit may sometimes suffer from variation in the color of light condensed by the condenser lens, the variation which is seen at the outer edge portion of the light and which results from chromatic aberration of the condenser lens. Reducing such variation in the color of emitted light is an issue of the backlight unit.

### SUMMARY OF THE INVENTION

It is therefore an object of the present invention to provide a backlight unit capable of reducing variation in the color of emitted light.

In order to achieve the above mentioned object, a backlight unit according to one aspect of the present invention includes a first light source; a first front lens that faces the first light source and is configured to condense light emitted from the first light source; a first rear lens that faces a light-emitting surface of the first front lens and is configured to condense light emitted from the first front lens; a second light source that is disposed adjacent to the first light source; a second front lens that faces the second light source and is configured to condense light emitted from the second light source; a second rear lens that faces a light-emitting surface of the second front lens and is connected with the first rear lens at edges and is configured to condense light emitted from the second front lens; and a diffusion member that faces a light-emitting surface of the first rear lens and a light-emitting surface of the second rear lens, wherein an outer edge portion of the light condensed by the first front lens enters the edge of the second rear lens, and an outer edge portion of the light condensed by the second front lens enters the edge of the first rear lens.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a schematic configuration diagram of a head-up display according to an embodiment;
FIG. 2 is a sectional view of a backlight unit according to the embodiment;
FIG. 3 is a plan view of a first rear lens and a second rear lens of the embodiment;
FIG. 4 is a graph that indicates the relation between the diffusion of a light on a diffusion member and the relative intensity of the light; and
FIG. 5 is a graph that indicates the relation between the incident angle of the light entering the diffusion member from each of the first rear lens and the second rear lens and the relative intensity of the light in a test example.

### DETAILED DESCRIPTION OF THE PREFERRED EMBODIMENTS

A backlight unit and a head-up display of an embodiment of the present invention will now be described in detail with reference to the drawings. The embodiment is not intended to limit the present invention. Components of the embodiment described below include what the skilled person could easily perceive, and what are substantially the same.

### Embodiments

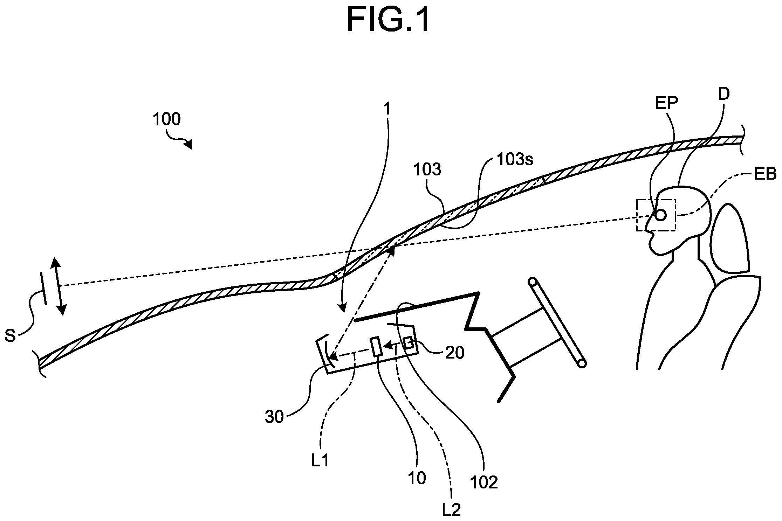

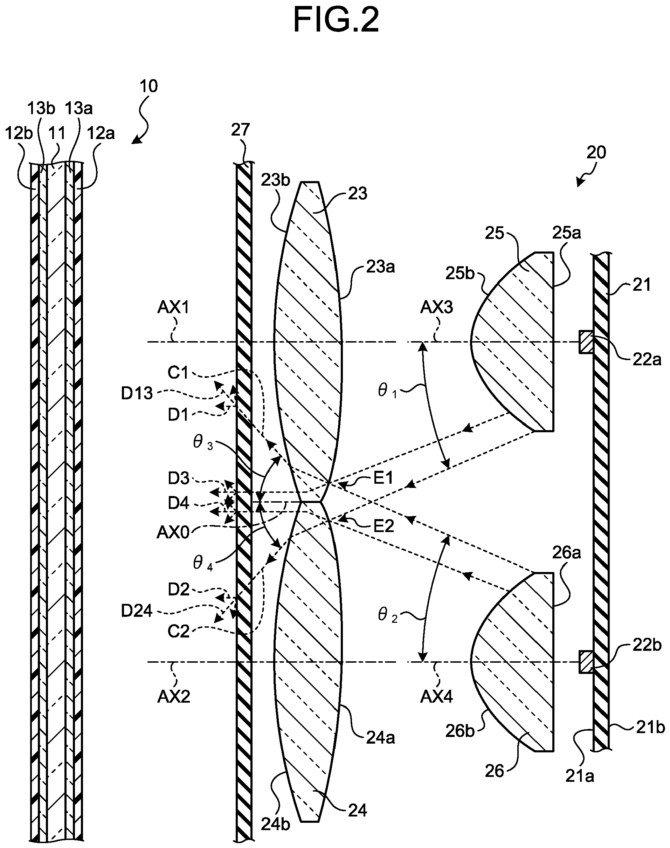

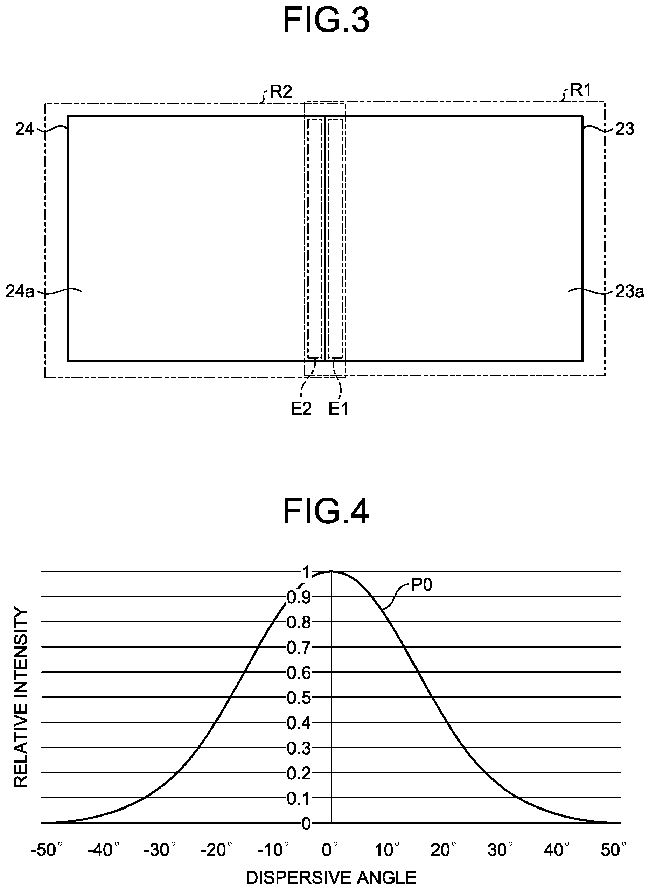

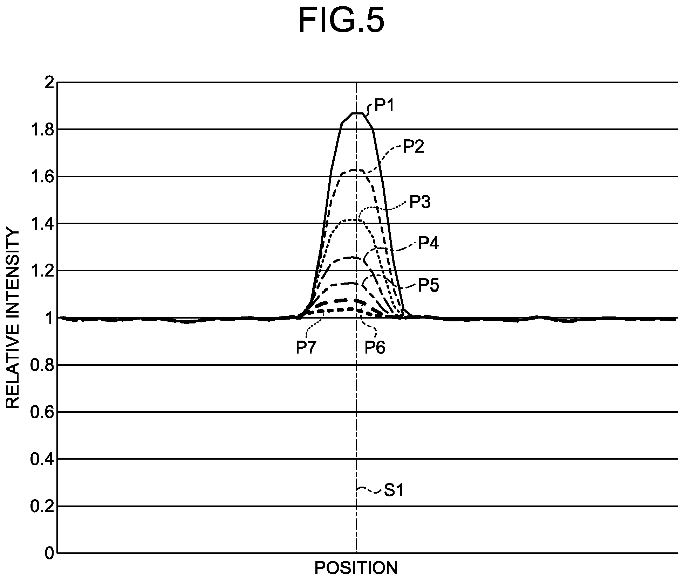

An embodiment will now be described with reference to FIGS. 1 to 5. The embodiment relates to a backlight unit and a head-up display. FIG. 1 is a schematic configuration diagram of the head-up display of the embodiment. FIG. 2 is a sectional view of the backlight unit of the embodiment. FIG. 3 is a plan view of a first rear lens and a second rear lens of the embodiment. FIG. 4 is a graph that indicates the relation between the diffusion of a light on a diffusion member and the relative intensity of the light. FIG. 5 is a graph that indicates the relation between the incident angle of the light entering the diffusion member from each of the first rear lens and the second rear lens and the relative intensity of the light in a test example. FIG. 2 particularly illustrates the sectional surfaces of the backlight unit and the liquid crystal display unit in the height direction of a vehicle.

As illustrated in FIG. 1, a head-up display 1 of the embodiment is mounted on a vehicle 100, such as a car. The head-up display 1 is disposed inside a dashboard 102 of the vehicle 100. The head-up display 1 projects a display light L1 toward a reflection surface 103s of a display member 103 of the vehicle 100. In this embodiment, the display member 103 is a windshield. The display member 103 is placed in front of a driver D on the vehicle 100. The reflection surface 103s of the display member 103 may be coated with a semi-transparent material that reflects a part of incident light and makes other parts penetrate therethrough. The display light L1 projected onto the reflection surface 103s is reflected on the reflection surface 103s toward an eye box EB of the vehicle 100 and is visually recognized by the driver D as a virtual image S. The eye box EB is an area that allows the driver D on the vehicle 100 to visually recognize the virtual image S. The eye box EB includes an eye point EP.

The head-up display 1 of the embodiment includes a liquid crystal display unit 10, a backlight unit 20 of the embodiment, and a reflection member 30.

The liquid crystal display unit 10 projects an image by throwing a light L2, emitted from the later-described backlight unit 20, as the display light L1. The liquid crystal display unit 10 of the embodiment uses, for example, a light-transmissive thin film transistor (TFT) liquid crystal display. As illustrated in FIG. 2, the liquid crystal display unit 10 includes a liquid crystal layer 11, a pair of polarizers 12a and 12b, and a pair of substrates 13a and 13b. The liquid crystal layer 11 is disposed between the pair of polarizers 12a and 12b. The substrate 13a is disposed between the liquid crystal layer 11 and the polarizer 12a, and the substrate 13b is disposed between the liquid crystal layer 11 and the polarizer 12b. The respective substrates 13a and 13b in pairs are provided with a pair of counter electrodes. Each of the counter electrodes includes a plurality of pixel electrodes corresponding to respective pixels and a common electrode. The crystal orientation of the liquid crystal layer 11 varies according to the potential difference caused between the pair of counter electrodes. The pair of polarizers 12a and 12b are disposed in crossed nicols. The light transmittance of the liquid crystal display unit 10 varies with a change in the crystal orientation of the liquid crystal layer 11.

As illustrated in FIG. 1, the reflection member 30 is configured to reflect the display light L1 toward the reflection surface 103s. The reflection member 30 of the embodiment is a magnification mirror that magnifies the display light L1, projected from the liquid crystal display unit 10, for reflection. The reflection member 30 may use, for example, an aspheric (freeform) mirror.

The backlight unit 20 is a lighting device that emits the light L2 toward the liquid crystal display unit 10. As illustrated in FIG. 2, the backlight unit 20 includes a base member 21, a first light source 22a, a second light source 22b, a first front lens 25, a second front lens 26, a first rear lens 23, a second rear lens 24, and a diffusion member 27. The base member 21 is a plate-like member having two main surfaces 21a and 21b. One of the main surfaces 21a of the base member 21 has the first light source 22a and the second light source 22b fixed thereto. The first light source 22a and the second light source 22b are adjacent to each other. The first light source 22a and the second light source 22b may use, for example, light emitting diodes (LEDs). The first light source 22a and the second light source 22b are lighted by receiving electric power from a power source mounted on the vehicle 100. The other main surface 21b of the base member 21 may have a heat sink (not illustrated) fixed thereto. Heat generated by the first light source 22a and the second light source 22b is accumulated in the base member 21. The heat sink can discharge the heat accumulated in the base member 21 outside the backlight unit 20.

The first front lens 25 faces the first light source 22a. The first front lens 25 condenses light emitted from the first light source 22a. The first front lens 25 has a light-receiving surface 25a and a light-emitting surface 25b. The light-receiving surface 25a faces the first light source 22a. The light-emitting surface 25b is a surface opposite to the light-receiving surface 25a. When viewed from the first light source 22a, the first front lens 25 is rectangular. The first front lens 25 is a plano-convex lens having a flat light-receiving surface 25a and a convex curved light-emitting surface 25b.

The second front lens 26 faces the second light source 22b. The second front lens 26 condenses light emitted from the second light source 22b. The second front lens 26 has a light-receiving surface 26a and a light-emitting surface 26b. The light-receiving surface 26a faces the second light source 22b. The light-emitting surface 26b is a surface opposite to the light-receiving surface 26a. When the second front lens 26 is viewed from the second light source 22b, the second front lens 26 is rectangular. The second front lens 26 is substantially in the same shape as the first front lens 25, in other words, the second front lens 26 is a plano-convex lens having a flat light-receiving surface 26a and a convex curved light-emitting surface 26b.

The first front lens 25 and the second front lens 26 are made of a resin material. In the embodiment, the second front lens 26 is separately provided from the first front lens 25. The first front lens 25 and the second front lens 26 may be integrally formed as a lens array.

The first rear lens 23 is disposed facing the light-emitting surface 25b of the first front lens 25. The first rear lens 23 condenses light from the first front lens 25 and turns the light into a light substantially parallel to an optical axis AX1 of the first rear lens 23 and emits the light. The first rear lens 23 has a light-receiving surface 23a and a light-emitting surface 23b. The light-receiving surface 23a faces the light-emitting surface 25b of the first front lens 25. The light-emitting surface 23b is a surface opposite to the light-receiving surface 23a. When viewed from the first front lens 25, the first rear lens 23 is rectangular. The first rear lens 23 is a biconvex lens having the light-receiving surface 23a convexly curved toward the first front lens 25, and has the light-emitting surface 23b convexly curved toward the side opposite to the light-receiving surface 23a.

The second rear lens 24 is disposed facing the light-emitting surface 26b of the second front lens 26. The second rear lens 24 condenses light from the second front lens 26 and turns the light into a light substantially parallel to an optical axis AX2 of the second rear lens 24 and emits the light. The first rear lens 23 and the second rear lens 24 are disposed with the optical axis AX1 and the optical axis AX2 parallel to each other. The second rear lens 24 has a light-receiving surface 24a and a light-emitting surface 24b. The light-receiving surface 24a faces the light-emitting surface 26b of the second front lens 26. The light-emitting surface 24b is a surface opposite to the light-receiving surface 24a. When viewed from the second front lens 26, the second rear lens 24 is rectangular. The second rear lens 24 is substantially in the same shape as the first rear lens 23. The second rear lens 24 is a biconvex lens having the light-receiving surface 24a convexly curved toward the second front lens 26, and has the light-emitting surface 24b convexly curved toward the side opposite to the light-receiving surface 24a. An edge E2 of the second rear lens 24 is connected to an edge E1 of the first rear lens 23.

The diffusion member 27 is disposed facing the light-emitting surface 23b of the first rear lens 23 and the light-emitting surface 24b of the second rear lens 24. The diffusion member 27 is a plate-like or a sheet-like member to diffuse light from the first rear lens 23 and light from the second rear lens 24. The diffusion member 27 is disposed between the first rear lens 23 and the second rear lens 24, and the liquid crystal display unit 10. The distance to the diffusion member 27 from the first rear lens 23 and the second rear lens 24 is shorter than the distance to the diffusion member 27 from the liquid crystal display unit 10. Light diffused by the diffusion member 27 enters the liquid crystal display unit 10 and is emitted from the liquid crystal display unit 10 as the display light L1.

A common condenser lens for condensing light occasionally emits light having a yellowish outer edge portion because of the chromatic aberration of the condenser lens. For example, when the light rays, emitted from adjacent two condenser lenses, are overlapped with each other at the respective outer edge portions, the overlapped portions cause variation in the color of the light. The overlapped portions, the outer edge portions of the light rays emitted from adjacent two condenser lenses, have higher luminance, and cause variation in the luminance. The backlight unit 20 of the embodiment including the later-described first front lens 25, the second front lens 26, the first rear lens 23, and the second rear lens 24, is advantageous in reducing variation in the luminance and the color resulting from chromatic aberration of the lenses.

As illustrated in FIG. 3, light condensed by the first front lens 25 is emitted toward the light-receiving surface 23a of the first rear lens 23 and illuminates an area slightly larger than the light-receiving surface 23a. An area R1 of FIG. 3 represents the area illuminated by the light condensed by the first front lens 25. The area R1 is a rectangular area. Four sides of the area R1 are located outer than the edges of the light-receiving surface 23a and thus surround the light-receiving surface 23a. Furthermore, light condensed by the second front lens 26 is emitted toward the light-receiving surface 24a of the second rear lens 24 and illuminates an area slightly larger than the light-receiving surface 24a. An area R2 of FIG. 3 represents the area illuminated by the light condensed by the second front lens 26. The area R2 is a rectangular area. Four sides of the area R2 are located outer than the edges of the light-receiving surface 24a and thus surround the light-receiving surface 24a.

Light condensed by the first front lens 25 illuminates the area slightly larger than the light-receiving surface 23a, and light condensed by the second front lens 26 illuminates the area slightly larger than the light-receiving surface 24a. This structure is beneficial in, for example, reducing variation in the luminance caused by, for example, deviations in the relative positions of the light sources and lenses. This structure of the backlight unit is further beneficial in reducing variation in the luminance derived from position tolerances of the lenses with respect to each other and size tolerances of the lenses.

As illustrated in FIG. 3, the edge E2, of the second rear lens 24, close to the first rear lens 23 receives the outer edge portion of the light condensed by the first front lens 25. Likewise, the edge E1, of the first rear lens 23, close to the second rear lens 24 receives the outer edge portion of the light condensed by the second front lens 26.

As illustrated in FIG. 2, first incident light C1 entering the diffusion member 27 from the second front lens 26 through the first rear lens 23 is diffused by the diffusion member 27. The diffusion member 27 emits a part of the first incident light C1 as first emitted light D1 that travels along the direction of the optical axis of the first rear lens 23. The first emitted light D1 is an element of light along the direction of the optical axis of the first rear lens 23, of the light diffused by the diffusion member 27.

The diffusion member 27 further diffuses second incident light C2 entering the diffusion member 27 from the first front lens 25 through the second rear lens 24. A part of the second incident light C2 is diffused by the diffusion member 27 as second emitted light D2 that travels along the direction of the optical axis of the second rear lens 24. The second emitted light D2 is an element of light along the direction of the optical axis of the second rear lens 24, of the light diffused by the diffusion member 27.

Relation between the diffusion angle of a light diffused by the diffusion member 27 and the relative intensity of the light will now be described with reference to FIG. 4. In FIG. 4, the intensity of a light diffused at a diffusion angle of zero degree is indicated by a relative value of "1 (1.0)". The light diffused from the diffusion member 27 at a diffusion angle of zero degree is a light parallel to the incident light entering the diffusion member 27. For example, a light diffused at a diffusion angle of 30 degrees is a light inclined with respect to the incident light entering the diffusion member 27 by 30 degrees. As illustrated in FIG. 4, light diffused by the diffusion member 27 has the relative intensity decreased with an increase in the diffusion angle. For example, the relative intensity of a light is 0.3 at a diffusion angle of 25 degrees.

As illustrated in FIG. 2, the light entering the edge E2 of the second rear lens 24 from the first front lens 25 is turned into light having the angle of inclination θ₄ that is equal to or greater than a predetermined angle with respect to the optical axis AX2 of the second rear lens 24, and is emitted from the second rear lens 24. Similarly, the light entering the edge E1 of the first rear lens 23 from the second front lens 26 is turned into light having the angle of inclination θ₃ that is equal to or greater than the predetermined angle with respect to the optical axis of the first rear lens 23, and is emitted from the first rear lens 23. An axis AX0 parallel to the optical axes AX1 and AX2 is depicted for convenience in FIG. 2.

The predetermined angle is an angle that allows the relative intensity of the first emitted light D1 to third emitted light D13 and the relative intensity of the second emitted light D2 to fourth emitted light D24 to be equal to or smaller than a predetermined value. The third emitted light D13 is a light, of the first incident light C1, that is diffused by the diffusion member 27 along the incident direction of the first incident light C1. The fourth emitted light D24 is a light, of the second incident light C2, that is diffused by the diffusion member 27 along the incident direction of the second incident light C2. The predetermined value represents a value that renders the driver D to have difficulty in visually recognizing (or to be unable to visually recognize) the first emitted light D1 and the second emitted light D2 when an image is displayed by the head-up display 1. For example, with both the relative intensity of the first emitted light D1 to the third emitted light D13 and the relative intensity of the second emitted light D2 to the fourth emitted light D24 equal to or smaller than 0.3, the first emitted light D1 is hard to be (or cannot be) visually recognized by the driver D, when an image is displayed by the head-up display 1. In other words, the driver D is hard to visually recognize light (the outer edge portions of light emitted from the first front lens 25 and light emitted from the second front lens 26) that causes variation in the color. This structure is therefore beneficial in reducing variation in the color and in the luminance of an image displayed by the head-up display 1. When the relative intensity is 0.3, the angles of inclination θ₄ and θ₃ are approximately 25 degrees. For example, light with the angle of inclination θ₄ and light with the angle of inclination θ₃ approximately twice (about 50 degrees) as large as the angle corresponding to the relative intensity of 0.3 less cause variation in the color and are substantially unrecognizable to the driver D.

In this embodiment, a plurality of diffusion members 27 may be arranged between the light-emitting surface 23b and the light-emitting surface 24b, and the liquid crystal display unit 10. In this case, the predetermined angle is an angle corresponding to the relative intensity of equal to or smaller than a predetermined value to the composed diffusion characteristics of the diffusion members 27.

A test example of the head-up display 1 of the embodiment will now be described with reference to FIG. 5. In FIG. 5, the abscissa indicates the positions of the first rear lens 23 and the second rear lens 24 in the direction of transverse alignment on the diffusion member 27. The ordinate indicates the relative intensity of light emitted from the diffusion member 27 along the optical axes AX1 and AX2. The relative intensity of FIG. 5 indicates relative values with the intensity of a light, emitted from the first front lens 25 and passing through the first rear lens 23 and the diffusion member 27 and exiting along the optical axes AX1 and AX2, set at "1 (1.0)". A boundary S1 of FIG. 5 represents a position on the diffusion member 27 corresponding to the boundary between the first rear lens 23 and the second rear lens 24.

In FIG. 5, data P1 represents relative intensity with the angles of inclination θ₃ and θ₄ illustrated in FIG. 2 set at 25 degrees. Data P2 represents relative intensity with the angles of inclination θ₃ and θ₄ set at 30 degrees. Likewise, data P3 represents relative intensity with the angles of inclination θ₃ and θ₄ set at 35 degrees, data P4 represents at 40 degrees, data P5 represents at 45 degrees, data P6 represents at 50 degrees, and data P7 represents at 55 degrees.

Lights from the first front lens 25 and the second front lens 26 adjacent to each other overlap on one over the other at the position corresponding to the boundary between the first rear lens 23 and the second rear lens 24, which causes the relative intensity of light, emitted from the diffusion member 27, to be increased at the position compared to other positions. In the areas corresponding to the edge E1 of the first rear lens 23 and the edge E2 of the second rear lens 24, the relative intensity is exponentially incremented as the position gets closer to a position (the boundary S1) corresponding to the boundary between the first rear lens 23 and the second rear lens 24. In the areas corresponding to the edge E1 of the first rear lens 23 and the edge E2 of the second rear lens 24, the relative intensity is decreased as the angles of inclination θ₃ and θ₄ become larger. Overlap of light from the first front lens 25 and light from the second front lens 26 therefore less affects the color and luminance. In other words, as the angles of inclination θ₃ and θ₄ become larger, light (outer edge portions of light from the first front lens 25 and light from the second front lens 26) causing variation in the color and luminance becomes less visually recognizable by the driver D. For example, the relative intensity at the boundary S1 is smaller than 1.1 when the angles of inclination θ₃ and θ₄ are equal to or greater than 50 degrees. More specifically, the substantial relative intensity, derived from only the light causing color variation and luminance variation, is 0.1. With the angles of inclination θ₃ and θ₄ set at equal to or greater than 50 degrees, light causing variation in the color and luminance is diffused toward the outside area of the eye box EB (see FIG. 1) of the driver D and is therefore substantially unrecognizable.

The backlight unit 20 of the embodiment is configured such that the first emitted light D1 has relative intensity of equal to or smaller than a second predetermined value with respect to the light D3, emitted from the first front lens 25 and passing through the first rear lens 23 and the diffusion member 27 and exiting along the direction of the optical axis of the first rear lens 23. For example, in the comparison between the light D3 and the first emitted light D1, both of which are emitted from the same position on the diffusion member 27, the first emitted light D1 has relative intensity of equal to or smaller than the second predetermined value with respect to the light D3. The second emitted light D2 has relative intensity of equal to or smaller than the second predetermined value with respect to the light D4, emitted from the second front lens 26 and passing through the second rear lens 24 and the diffusion member 27 and exiting along the direction of the optical axis of the second rear lens 24. For example, in the comparison between the light D4 and the second emitted light D2, both of which exit from the same position on the diffusion member 27, the second emitted light D2 has relative intensity of equal to or smaller than the second predetermined value with respect to the light D4. The second predetermined value is a certain value of relative intensity at which the driver D can visually recognize the light D3 and the light D4 while being hard to (or unable to) visually recognize the first emitted light D1 and the second emitted light D2. For example, the second predetermined value is 0.1.

When the angle of inclination θ₄ is 50 degrees, an angle of inclination θ₁ of a light traveling from the edge of the first front lens 25 toward the edge of the second rear lens 24 may be equal to or greater than 25 degrees. The angle of inclination θ₁ is the angle of inclination to an optical axis AX3 of the first front lens 25. When the angle of inclination θ₃ is 50 degrees, an angle of inclination θ₂ of a light traveling from the edge of the second front lens 26 toward the edge of the first rear lens 23 may be equal to or greater than 25 degrees. This structure allows the first rear lens 23 and the second rear lens 24 to have increased radii of curvature. For example, increasing the radii of curvature of the first rear lens 23 and the second rear lens 24 can reduce the distance from the first rear lens 23 and the second rear lens 24 to the diffusion member 27. In the embodiment, the optical axis AX3 and the optical axis AX1 are coaxial, and the optical axis AX4 and the optical axis AX2 are coaxial.

As described above, the backlight unit 20 of this embodiment includes: the first light source 22a, the first front lens 25 facing the first light source 22a and configured to condense light emitted from the first light source 22a, the first rear lens 23 facing the light-emitting surface 25b of the first front lens 25 and configured to condense light emitted from the first front lens 25, the second light source 22b adjacent to the first light source 22a, the second front lens 26 facing the second light source 22b and configured to condense light emitted from the second light source 22b, the second rear lens 24 facing the light-emitting surface 26b of the second front lens 26 and has the edge E2 thereof connected with the edge E1 of the first rear lens 23 and configured to condense light emitted from the second front lens 26, and the diffusion member 27 facing the light-emitting surface 23b of the first rear lens 23 and the light-emitting surface 24b of the second rear lens 24. An outer edge portion of the light condensed by the first front lens 25 enters the edge E2 of the second rear lens 24, and an outer edge portion of the light condensed by the second front lens 26 enters the edge E1 of the first rear lens 23.

A backlight unit of a comparative example may employ condenser lenses arranged in a matrix to condense light from a light source. Such a condenser lens may emit light the outer edge portion of which is yellowish due to the chromatic aberration of the lens. An overlap between outer edge portions of light emitted from adjacent two condenser lenses may cause variation in the color and the luminance of light emitted from the backlight unit.

The backlight unit 20 of the embodiment is configured such that the outer edge portion of the light condensed by the first front lens 25 enters the edge E2 of the second rear lens 24, whereas the outer edge portion of the light condensed by the second front lens 26 enters the edge E1 of the first rear lens 23. This configuration is beneficial in preventing an overlap between the outer edge portions of light, which are likely to be yellowish due to the chromatic aberration of the lenses, on the diffusion member 27. The backlight unit 20 is therefore allowed to emit the light L2 with less variation in the color. Furthermore, in this configuration, light from the first light source 22a is condensed by the first front lens 25 and then by the first rear lens 23, and light from the second light source 22b is condensed by the second front lens 26 and then by the second rear lens 24. This structure can enhance the efficiency of use of the light from the light sources. In other words, the power consumption of the backlight unit is reduced.

The backlight unit 20 of the embodiment is configured such that the light entering the edge E2 of the second rear lens 24 from the first front lens 25 is turned into light having the angle of inclination θ₄ of equal to or greater than a predetermined angle to the optical axis AX2 of the second rear lens 24 and then emitted from the second rear lens 24, whereas the light entering the edge E1 of the first rear lens 23 from the second front lens 26 is turned into light having the angle of inclination θ₃ of equal to or greater than a predetermined angle to the optical axis AX1 of the first rear lens 23 and then emitted from the first rear lens.

Of the light diffused by the diffusion member 27, intensity of light emitted along the optical axis AX1 and light emitted along the optical axis AX2 is further reduced with increases in the angles of inclination θ₃ and θ₄. The outer edge portion of the light condensed by the second front lens 26 and the outer edge portion of the light condensed by the first front lens 25 enter the diffusion member 27, respectively, through the edge E1 and the edge E2 at the angle of inclination θ₃ and the angle of inclination θ₄. This structure reduces the intensity of light emitted along the optical axis AX1 and light emitted along the optical axis AX2. The backlight unit 20 is therefore allowed to emit the light L2 with less variation in the color and the luminance.

The backlight unit 20 of the embodiment is configured such that a part of the first incident light C1 entering the diffusion member 27 from the second front lens 26 through the first rear lens 23 is emitted as the first emitted light D1 along the direction of the optical axis of the first rear lens 23, and a part of the second incident light C2 entering the diffusion member 27 from the first front lens 25 through the second rear lens 24 is emitted as the second emitted light D2 along the direction of the optical axis of the second rear lens 24. Of the first incident light C1, the first emitted light D1 has relative intensity of equal to or smaller than a predetermined value with respect to the third emitted light D13 emitted from the diffusion member along the incident direction. Likewise, of the second incident light C2, the second emitted light D2 has relative intensity of equal to or smaller than a predetermined value with respect to the fourth emitted light D24 emitted from the diffusion member along the incident direction. In the backlight unit 20 of the embodiment, the predetermined value is 0.3.

The backlight unit 20 of the embodiment is configured such that a part of the first incident light C1, entering the diffusion member 27 from the second front lens 26 through the first rear lens 23, is emitted as the first emitted light D1 along the direction of the optical axis of the first rear lens 23, and a part of the second incident light C2, entering the diffusion member 27 from the first front lens 25 through the second rear lens 24, is emitted as the second emitted light D2 along the direction of the optical axis of the second rear lens 24. The first emitted light D1 has relative intensity of equal to or smaller than a second predetermined value with respect to the light D3, emitted from the first front lens 25 and passing through the first rear lens 23 and the diffusion member 27 and exiting along the direction of the optical axis of the first rear lens 23. The second emitted light D2 has relative intensity of equal to or smaller than the second predetermined value with respect to the light D4, emitted from the second front lens 26 and passing through the second rear lens 24 and the diffusion member 27 and exiting along the direction of the optical axis of the second rear lens 24. In the backlight unit 20 of the embodiment, the second predetermined value is 0.1.

The head-up display 1 of the embodiment includes the backlight unit 20 and the liquid crystal display unit 10 configured to project an image using light emitted from the backlight unit 20. The backlight unit 20 includes: the first light source 22a, the first front lens 25 facing the first light source 22a and configured to condense light emitted from the first light source 22a, the first rear lens 23 facing the light-emitting surface 25b of the first front lens 25 and configured to condense light emitted from the first front lens 25, the second light source 22b adjacent to the first light source 22a, the second front lens 26 facing the second light source 22b and configured to condense light emitted from the second light source 22b, the second rear lens 24 facing the light-emitting surface 26b of the second front lens 26 and connected with the first rear lens 23 at the edges E1, E2 and configured to condense light emitted from the second front lens 26, and the diffusion member 27 facing the light-emitting surface 23b of the first rear lens 23 and the light-emitting surface 24b of the second rear lens 24. The outer edge portion of the light condensed by the first front lens 25 enters the edge E2 of the second rear lens 24, and the outer edge portion of the light condensed by the second front lens 26 enters the edgeE1 of the first rear lens 23.

The head-up display 1 of the embodiment is advantageous in reducing variation in the color of a projected image with the backlight unit 20 of the embodiment emitting light to the liquid crystal display unit 10.

In the above-described embodiment, as an example, the backlight unit 20 includes two light sources 22a and 22b, two front lenses 25 and 26, and two rear lenses 23 and 24. The backlight unit 20 may include three or more light sources, front lenses, and rear lenses. In this case, for example, the light sources, the front lenses, and the rear lenses may be arranged in matrices, and the edges of the rear lenses are connected with one another.

The backlight unit of the present embodiment is configured such that an outer edge portion of the light condensed by a first front lens enters the edge of a second rear lens, whereas an outer edge portion of the light condensed by a second front lens enters the edge of a first rear lens. This configuration of the backlight unit of the present embodiment is advantageous in reducing variation in the color of emitted light.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A backlight unit (20), comprising:
a first light source (22a);
a first front lens (25) that faces the first light source (22a) and is configured to condense light emitted from the first light source (22a);
a first rear lens (23) that faces a light-emitting surface (25b) of the first front lens (25) and is configured to condense light emitted from the first front lens (25);
a second light source (22b) that is disposed adjacent to the first light source (22a);
a second front lens (26) that faces the second light source (22b) and is configured to condense light emitted from the second light source (22b);
a second rear lens (24) that faces a light-emitting surface (26b) of the second front lens (26) and is connected with the first rear lens (23) at edges (E1, E2) and is configured to condense light emitted from the second front lens (26); and
a diffusion member (27) that faces a light-emitting surface (23b) of the first rear lens (23) and a light-emitting surface (24b) of the second rear lens (24), wherein
an outer edge portion of the light condensed by the first front lens (25) enters the edge (E2) of the second rear lens (24), and an outer edge portion of the light condensed by the second front lens (26) enters the edge (E1) of the first rear lens (23).

2. The backlight unit (20) according to claim 1, wherein
the light entering the edge (E2) of the second rear lens (24) from the first front lens (25) is turned into light having an angle (θ₄) of inclination of equal to or greater than a predetermined angle to an optical axis of the second rear lens (24) and is emitted from the second rear lens (24), and
the light entering the edge (E1) of the first rear lens (23) from the second front lens (26) is turned into light having an angle (θ₃) of inclination of equal to or greater than a predetermined angle to an optical axis of the first rear lens (23) and is emitted from the first rear lens (23).

3. The backlight unit (20) according to claim 1 or 2, wherein
a part of first incident light (C1) entering the diffusion member (27) from the second front lens (26) through the edge (E1) of the first rear lens (23) is emitted as first emitted light (D1) along a direction of an optical axis of the first rear lens (23);
a part of second incident light (C2) entering the diffusion member (27) from the first front lens (25) through the edge (E2) of the second rear lens (24) is emitted as second emitted light (D2) along a direction of an optical axis of the second rear lens (24);
of the first incident light (C1), the first emitted light (D1) has relative intensity of equal to or smaller than a predetermined value with respect to third emitted light (D13) emitted from the diffusion member (27) along an incident direction; and
of the second incident light (C2), the second emitted light (D2) has relative intensity of equal to or smaller than the predetermined value with respect to fourth emitted light (D24) emitted from the diffusion member (27) along an incident direction.

4. The backlight unit (20) according to claim 3, wherein
the predetermined value is 0.3.

5. The backlight unit (20) according to claim 1 or 2, wherein
a part of first incident light (C1) entering the diffusion member (27) from the second front lens (26) through the edge (E1) of the first rear lens (23) is emitted as first emitted light (D1) along a direction of an optical axis of the first rear lens (23);
a part of second incident light (C2) entering the diffusion member (27) from the first front lens (25) through the edge (E2) of the second rear lens (24) is emitted as second emitted light (D2) along a direction of an optical axis of the second rear lens (24);
the first emitted light (D1) has relative intensity of equal to or smaller than a second predetermined value with respect to light emitted from the first front lens (25) and passing through the first rear lens (23) and the diffusion member (27) and exiting along the direction of the optical axis of the first rear lens (23); and
the second emitted light (D2) has relative intensity of equal to or smaller than the second predetermined value with respect to light emitted from the second front lens (26) and passing through the second rear lens (24) and the diffusion member (27) and exiting along the direction of the optical axis of the second rear lens (24).

6. The backlight unit (20) according to claim 5, wherein
the second predetermined value is 0.1.

7. A head-up display (1), comprising:
a backlight unit (20); and
a liquid crystal display unit (10) that is configured to project an image with light emitted from the backlight unit (20), wherein
the backlight unit (20) includes:
a first light source (22a);
a first front lens (25) that is faces the first light source (22a) and is configured to condense light emitted from the first light source (22a);
a first rear lens (23) that is faces a light-emitting surface (25b) of the first front lens (25) and is configured to condense light emitted from the first front lens (25);
a second light source (22b) that is disposed adjacent to the first light source (22a);
a second front lens (26) that faces the second light source (22b) and is configured to condense light emitted from the second light source (22b);
a second rear lens (24) that faces a light-emitting surface (26b) of the second front lens (26) and is connected with the first rear lens (23) at edges (E1, E2) and is configured to condense light emitted from the second front lens (26); and
a diffusion member (27) that faces a light-emitting surface (23b) of the first rear lens (23) and a light-emitting surface (24b) of the second rear lens (24), wherein
an outer edge portion of the light condensed by the first front lens (25) enters the edge (E2) of the second rear lens (24), and an outer edge portion of the light condensed by the second front lens (26) enters the edge (E1) of the first rear lens (23).
